# EUROPÄISCHE PATENTSCHRIFT

(11) **EP 1 018 356 B1**
(45) Veröffentlichungstag und Bekanntmachung des Hinweises auf die Patenterteilung: **31.07.2002**
(21) Anmeldenummer: 99112154.2
(22) Anmeldetag: 24.06.1999
(51) Int. Cl.: B01D 35/16

(54) **Spritzeinrichtung zur Reinigung der Innenwandung des Unfiltratraumes eines Kesselfilters**
Spray installation for cleaning the inside wall of the filter tank upstream of the filter
Dispositif de pulvérisation pour nettoyer la paroi intérieure de l' enceinte de filtration en amont du filtre

(30) Priorität: 10.09.1998 DE 19841368
(43) Veröffentlichungstag der Anmeldung: 12.07.2000
(73) Patentinhaber: KHS Maschinen- und Anlagenbau Aktiengesellschaft, 44143 Dortmund (DE)
(72) Erfinder: Schwartz, Helmut, 55543 Bad Kreuznach (DE)

(56) Entgegenhaltungen:
- GB-A- 1 043 928
- US-A- 2 562 730
- US-A- 2 921 685
- US-A- 3 280 978
- US-A- 4 213 861

## Beschreibung

Die Erfindung bezieht sich auf einen Kesselfilter mit einem Filtratraum, einem durch einen Zwischenboden von diesem getrennten Unfiltratraum, der aus einem zylindrischen Teil und einem darunter angeordneten kegelförmig verjüngten Sammelraum zum Aufnehmen und Ableiten der Filterrückstände gebildet ist und mit Filterelementen, die in Bohrungen des Zwischenbodens angeordnet sind sowie Mittel zum Reinigen dieses Unfiltratraumes sowie auf ein dazu geeignetes Verfahren.

Bei einem bekannten Verfahren zur Reinigung einer Filtereinrichtung wird der auf der Unfiltratseite der Filtereinrichtung an dem Filter eingestellte Kuchen dadurch entfernt, daß der zuführungsseitige Innenraum sowie ein Teil des oberhalb des zuführungsseitigen Innenraums gelegenen Filtratraumes bei geschlossener Abführungsseite von der Unfiltratseite her mit Wasser gefüllt ist, wobei die über dem Wasser stehende Luft in dem Filtratraum zusammengepreßt wird. Nach dem Einfüllen des Wassers und der Zusammenpressung der Luft im oberen Teil des Filtratraumes wird ein Abfluß auf der Unfiltratseite schlagartig geöffnet, so daß die unter Druck stehende Luft eine intensive Rückströmung des im Filtratraum befindlichen Wassers durch das Filter hindurch bewirkt und dadurch der auf der Unfiltratseite des Filters angeschwemmte Filterkuchen vom Filter gelöst wird und sich mit dem im Unfiltratraum befindlichen Wasser vermischt und mit diesem durch den Abfluß aus der Filtereinrichtung entfernt wird.

Dieses Verfahren ist zwar relativ einfach, hat aber einen entscheidenden Nachteil, der darin zu sehen ist, daß der von dem Filter abgelöste Filterkuchen mit einer Wassermenge vermischt wird, die annähernd gleich dem Gesamtvolumen beider Innenräume der Filtereinrichtung ist. Da dieses mit dem Filterkuchen vermischte Wasser nicht in dieser Form in das Abwasser eingeleitet werden kann, ist nachträglich noch eine umständliche Trennung des Trubes von dem Wasser erforderlich. Dadurch werden relativ hohe Anlagenkosten und auch nicht unbeträchtliche Unterhaltungskosten verursacht.

Dieses Verfahren ist im wesentlichen darauf ausgerichtet, den Filterkuchen an den Filterkerzen zu entfernen. Eine Reinigung des Innenraumes, beispielsweise Wandungen des Unfiltratraumes, kann hiermit nur bedingt vorgenommen werden.

Es ist ferner bekannt, im unteren Unfiltratraum sternförmig ausgerichtete Tragbalken für das untere Ende von Filterkerzen vorzusehen, wobei diese Tragbalken zusätzlich mit einer Reinigungsflüssigkeitzuleitung verbunden sind und Öffnungen oder Düsen aufweisen, die in den Unfiltratraum gerichtet sind. Durch die stationäre Ausbildung solcher Düsen sind nur bestimmte Bereiche mit Reinigungsflüssigkeit beaufschlagbar, so daß eine intensive und vollständige Reinigung des Unfiltratraumes nicht in dem erforderlichen Maße gewährleistet ist.

Die US 4 213.861 beschreibt einen Kesselfilter mit den Merkmalen des Oberbegriffs des Anspruchs 1 der vorliegenden Erfindung, wobei eine vertikal ausgerichtete Spritzeinrichtung vorgesehen sein kann. Diese bekannte Spritzeinrichtung dient in erster Linie zur Reinigung der Filterkerzen, eine Abreinigung der Flächen des Unfiltratraumes ist jedoch nicht gegeben.

Die GB 1.043.928 betrifft keinen Kesselfilter mit Zwischenboden, wohl aber einen Kesselfilter mit Filterplatten und horizontal ausgerichteten Spritzrohren. Dabei wird auch die Innenwandung des Unfiltratraumes gereinigt.

Der Erfindung liegt nun die Aufgabe zugrunde, eine verbesserte Einrichtung zu schaffen, mit der möglichst der gesamte Innenraum- bzw. die gesamten Innenwandungen des Unfiltratraumes gereinigt und mit Reinigungsflüssigkeit beaufschlagt werden können.

Gelöst wird diese Aufgabe bei einem Kesselfilter der eingangs genannten Art dadurch, daß im Innenraum des Unfiltratraumes eine um eine im wesentlichen horizontale Achse in Rotation versetzbare Spritzeinrichtung angeordnet ist.

In einer Weiterbildung der Erfindung wird dabei vorgeschlagen, daß die Rotationsrichtung periodisch und/oder wechselweise umkehrbar ist.

Zweckmäßig besteht die Spritzeinrichtung aus einem rotierenden Spritzrohr, welches mit Beaufschlagung des Reinigungsmediums in Rotation versetzbar ist.

Mit der erfindungsgemäß vorgeschlagenen Ausgestaltung ist es nunmehr möglich, einen größtmöglichen Raum bzw. Bereich der Innenwandungen eines solchen Unfiltratraumes mit dem entsprechenden Reinigungsmedium zu erreichen und für eine ausreichende und zufriedenstellende Reinigung zu sorgen, ohne daß dadurch unnötig hohe Wassermengen, wie im eingangs genannten Fall, erforderlich sind.

Weiter kann vorgesehen sein, daß das Spritzrohr von innen und/oder außen antreibbar am Unfiltratraum des Kessels gelagert ist.

Es ist auch vorstellbar, daß das Spritzrohr mindestens einseitig im Mantel des Unfiltratraumes gelagert ist und mit einer von außen beaufschlagbaren Reinigungsmediumzuführung verbunden ist.

Weitere Merkmale ergehen aus den verbleibenden Unteransprüchen.

Im nachfolgenden wird die Erfindung anhand eines in der Zeichnung dargestellten Ausführungsbeispiels näher erläutert.

In der Zeichnung zeigt
Figur 1 einen Kesselfilter mit eingbauten Filterkerzen und
Figur 2 eine Ausgestaltung der Spritzeinrichtung.

Mit 1 ist ein haubenförmiger Filtratraum des Kesselfilters als Filtrationseinrichtung bezeichnet, unter dem sich ein Unfiltratraum 2 befindet. Unfiltratraum 2 besteht aus einem zylindrischen Teil mit einem sich nach unten kegelförmig verjüngenden Sammelraum 2, dessen Öffnungswinkel α etwa 40 bis 70° betragen kann. Beide Räume 1 und 2 sind durch einen Zwischenboden 3 mit Bohrungen zur Aufnahme von Filterelementen 4 voneinander getrennt. Der untere Teil des Sammelraumes 2' weist einen Stutzen 5 auf, der zur Zuführung und geeigneten Verteilung des Unfiltrats und zur Ableitung der Filterrückstände dient.

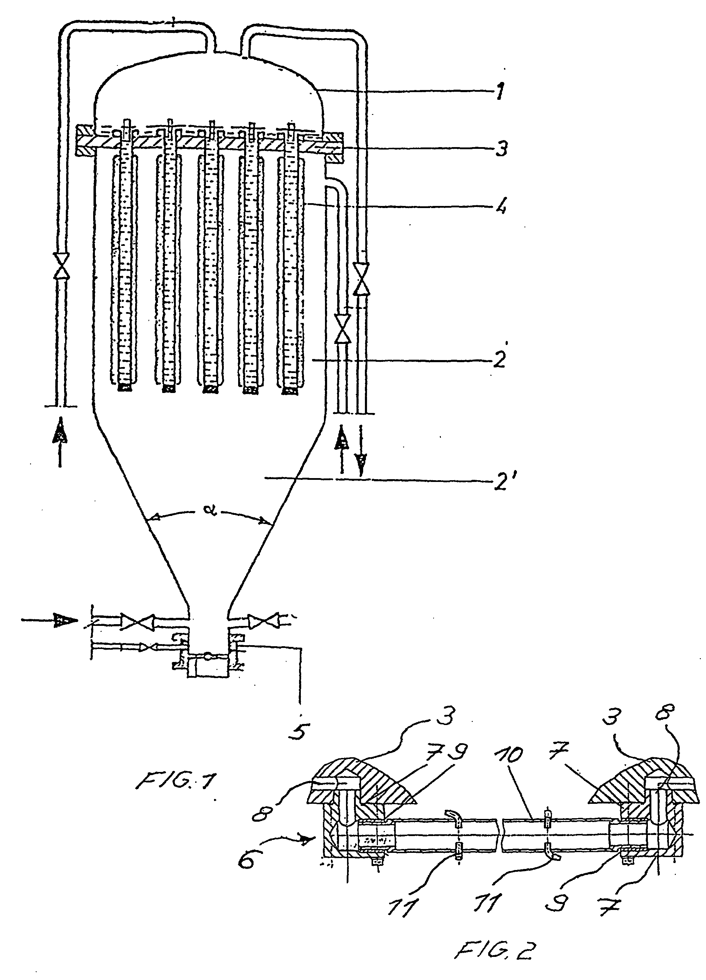

Gemäß dem in Figur 2 dargestellten Ausführungsbeispiel ist im Innenraum bzw. im oberen Bereich des Unfiltratraumes 2 eine um eine im wesentlichen horizontale Achse in Rotation versetzbare Spritzeinrichtung 6 angeordnet. Diese ist beispielsweise an dem Zwischenboden 3 befestigt und weist Lagergehäuse 7 auf, die mit einer Zu - und Ableitung 8 für ein Reinigungsmedium ausgestattet sind. Die beiden Lagergehäuse 7 nehmen die Stirnseiten 9 eines rotierenden Spritzrohres 10 auf, welches mit schräggerichteten Düsen 11 ausgestattet ist, die einen möglichst großen Raum innerhalb des Unfiltratraumes 2 mit Reinigungsmedium beaufschlagen können. Zweckmäßig ist die Rotationsrichtung dieses Spritzrohres 10 periodisch oder wechselweise umkehrbar, was durch besondere, hier nicht im einzelnen dargestellte Einrichtungen bewirkt werden kann. Die einfachste Ausführung besteht darin, daß durch den Ausstoß des Reinigungsmediums aus den Düsen 11 diese selbst mit dem Spritzrohr 10 in Rotation versetzt werden.

Es ist aber auch vorstellbar, daß das Spritzrohr 10 von innen oder von außen mit einer entsprechenden Vorrichtung antreibbar am Zwischenboden 3 oder am Kessel selbst gelagert ist. Als Variante bietet sich an, daß das Spritzrohr 10 mindestens einseitig im Mantel des Unfiltratraumes 2 oder am Zwischenboden 3 gelagert ist und mit einer von außen beaufschlagbaren Reinigungsmediumszuführung verbunden ist, wobei ebenfalls ein Eigen- oder Fremdantrieb vorgesehen sein kann. Dabei durchsetzt das oder die Spritzrohre 10 die einzelnen Filterkerzen 4, wobei in deren Gruppe entsprechende Freiräume vorgesehen sein können. Es ist auch vorstellbar, eine größere Anzahl von Spritzrohren 10 auf unterschiedlichen Ebenen innerhalb des Unfiltratraumes 2 anzuordnen, um so eine weitere Verbesserung der Reinigungswirkung durch das Reinigungsmedium zu erzielen. Auch bietet sich an, die Spritzrohre 10 sternförmig zueinander auszurichten oder in Form einer beliebigen Matrix anzuordnen. Insgesamt ist dabei aus verfahrenstechnischer Sicht vorgesehen, daß die Flächen des Unfiltratraumes 2 durch eine zweckmäßig pulsierende Spritzung beaufschlagbar sind, die insbesondere durch ihre Impulswirkung eine vorteilhafte Ablösung von Rückständen bewirkt.

## Patentansprüche

1. Kesselfilter mit einem Filtratraum (1), einem durch einen Zwischenboden (3) von diesem getrennten Unfiltratraum (2), der aus einem zylindrischen Teil und einem darunter angeordneten kegelförmig verjüngten Sammelraum (2') zum Aufnehmen und Ableiten der Filterrückstände gebildet ist und mit Filterelementen (4), die in Bohrungen des Zwischenbodens angeordnet sind sowie Mittel zum Reinigen dieses Unfiltratraumes in Form einer Spritzeinrichtung, ***dadurch gekennzeichnet,* daß** im Innenraum des Unfiltratraumes (2) eine um eine im wesentlichen horizontale Achse in Rotation versetzbare Spritzeinrichtung (6) angeordnet ist.

2. Kesselfilter nach Anspruch 1, ***dadurch gekennzeichnet,* daß** die Rotationsrichtung der Spritzeinrichtung (6) periodisch und/oder wechselweise umkehrbar ist.

3. Kesselfilter nach Anspruch *1,* ***dadurch gekennzeichnet,* daß** die Spritzeinrichtung (6) aus einem rotierenden Spritzrohr (10) gebildet und mit Beaufschlagung des Reinigungsmediums in Rotation versetzbar ist.

4. Kesselfilter nach Anspruch 1 und 2, ***dadurch gekennzeichnet,* daß** das Spritzrohr (10) von innen und/oder außen antreibbar am Kessel gelagert ist.

5. Kesselfilter nach den Ansprüchen 1 und 2, ***dadurch gekennzeichnet,* daß** das Spritzrohr (10) mindestens einseitig im Mantel des Unfiltratraumes (2) gelagert und mit einer von außen beaufschlagbaren Reinigungsmediumzuführung (8) verbunden ist.

6. Kesselfilter nach den vorhergehenden Ansprüchen, ***dadurch gekennzeichnet,* daß** das Spritzrohr (10) an dem den Unfiltratraum (2) vom Filtratraum (1) trennenden Zwischenboden (3) gelagert ist.

7. Kesselfilter nach den vorhergehenden Ansprüchen, ***dadurch gekennzeichnet,* daß** das Spritzrohr (10) im wesentlichen horizontal verläuft und die Gruppe der Filterkerzen (4) durchsetzt.

8. Kesselfilter nach den vorhergehenden Ansprüchen, ***dadurch gekennzeichnet,* daß** mehrere Spritzrohre (10) auf unterschiedlichen Ebenen innerhalb des Unfiltratraumes (2) angeordnet sind.

9. Kesselfilter nach den vorhergehenden Ansprüchen, ***dadurch gekennzeichnet,* daß** die Spritzrohre (10) sternförmig zueinander ausgerichtet sind und jeweils einen Teil der Filterkerzengruppe durchsetzen.

10. Kesselfilter nach den vorhergehenden Ansprüchen, ***dadurch gekennzeichnet,* daß** die Achsen der Spritzrohre (10) matrixförmig ausgerichtet sind.

11. Kesselfilter nach den vorhergehenden Ansprüchen, ***dadurch gekennzeichnet,* daß** die Flächen des Unfiltratraumes (2) mittels der Spritzeinrichtung (6) durch eine pulsierende Spritzung beaufschlagbar sind.

## Claims

1. Boiler filter, having a filtrate chamber (1), a non-filtrate chamber (2) which is separated from said filtrate chamber by an intermediate base (3), and which non-filtrate chamber is formed from a cylindrical portion and a conically tapering collecting chamber (2'), situated therebeneath, to receive and discharge the filter residues, and having filter elements (4) which are disposed in bores in the intermediate base, as well as having means for cleaning this non-filtrate chamber in the form of a spraying arrangement, **characterised in that** a spraying arrangement (6), which can be set in rotation about a substantially horizontal axis, is disposed in the interior of the non-filtrate chamber (2).

2. Boiler filter according to claim 1, **characterised in that** the direction of rotation of the spraying arrangement (6) is periodically and/or alternately reversible.

3. Boiler filter according to claim 1, **characterised in that** the spraying arrangement (6) is formed from a rotatable spray tube (10) and can be set in rotation as a result of the cleaning medium acting thereupon.

4. Boiler filter according to claims 1 and 2, **characterised in that** the spray tube (10) is mounted on the boiler so as to be drivable from internally and/or from externally.

5. Boiler filter according to claims 1 and 2, **characterised in that** the spray tube (10) is mounted at least unilaterally in the casing of the non-filtrate chamber (2) and connected to a means (8) for supplying cleaning medium, which means can be acted upon from externally.

6. Boiler filter according to the preceding claims, **characterised in that** the spray tube (10) is mounted on the intermediate base (3) separating the non-filtrate chamber (2) from the filtrate chamber (1).

7. Boiler filter according to the preceding claims, **characterised in that** the spray tube (10) extends substantially horizontally and traverses the group of filter tubes (4).

8. Boiler filter according to the preceding claims, **characterised in that** a plurality of spray tubes (10) are disposed on different planes internally of the non-filtrate chamber (2).

9. Boiler filter according to the preceding claims, **characterised in that** the spray tubes (10) are orientated radially relative to one another and traverse a respective portion of the filter tube group.

10. Boiler filter according to the preceding claims, **characterised in that** the axes of the spray tubes (10) are orientated in a matrix-like manner.

11. Boiler filter according to the preceding claims, **characterised in that** pulsating spraying can act upon the faces of the non-filtrate chamber (2) by means of the spraying arrangement (6).

## Revendications

1. Filtre en cuve comportant un compartiment pour produit filtré (1), un compartiment pour produit non filtré (2) qui est séparé du premier par un fond intermédiaire (3) et qui est formé par une partie cylindrique et un collecteur (2') se rétrécissant en forme de cône, disposé au-dessous, destiné à recevoir et à évacuer les résidus de filtrage, et comportant des éléments de filtrage (4) qui sont disposés dans des perçages du fond intermédiaire, ainsi que des moyens pour nettoyer ce compartiment pour produit non filtré sous la forme d'un dispositif de pulvérisation, **caractérisé en ce que** dans le volume intérieur du compartiment pour produit non filtré (2) est disposé un dispositif de pulvérisation (6) qui peut être mis en rotation autour d'un axe sensiblement horizontal.

2. Filtre en cuve selon la revendication 1, **caractérisé en ce que** le sens de rotation du dispositif de pulvérisation (6) peut être inversé périodiquement et/ou alternativement.

3. Filtre en cuve selon la revendication 1, **caractérisé en ce que** le dispositif de pulvérisation (6) est formé par un tube de pulvérisation (10) rotatif et peut être mis en rotation sous l'action du fluide de nettoyage.

4. Filtre en cuve selon les revendications 1 et 2, **caractérisé en ce que** le tube de pulvérisation (10) est monté sur la cuve, de manière à pouvoir être entraîné, de l'intérieur et/ou de l'extérieur.

5. Filtre en cuve selon les revendications 1 et 2, **caractérisé en ce que** le tube de pulvérisation (10) est monté, au moins d'un côté, dans l'enveloppe du compartiment pour produit non filtré (2) et est relié à une arrivée de fluide de nettoyage (8) qui peut être alimentée de l'extérieur.

6. Filtre en cuve selon les revendications précédentes, **caractérisé en ce que** le tube de pulvérisation (10) est monté sur le fond intermédiaire (3) qui sépare le compartiment pour produit non filtré (2) du compartiment pour produit filtré (1),

7. Filtre en cuve selon les revendications précédentes, **caractérisé en ce que** le tube de pulvérisation (10) s'étend sensiblement horizontalement et traverse le groupe de chandelles de filtrage (4).

8. Filtre en cuve selon les revendications précédentes, **caractérisé en ce que** plusieurs tubes de pulvérisation (10) sont disposés sur différents plans à l'intérieur du compartiment pour produit non filtré (2).

9. Filtre en cuve selon les revendications précédentes, **caractérisé en ce que** les tubes de pulvérisation (10) sont orientés en étoile les uns par rapport aux autres et traversent chacun une partie de groupes de chandelles de filtrage.

10. Filtre en cuve selon les revendications précédentes, **caractérisé en ce que** les axes des tubes de pulvérisation (10) sont disposés en forme de matrice.

11. Filtre en cuve selon les revendications précédentes, **caractérisé en ce que** les surfaces du compartiment pour produit non filtré (2) peuvent être soumises au moyen du dispositif de pulvérisation (6), à une pulvérisation pulsée.
